# EUROPÄISCHE PATENTANMELDUNG

(11) **EP 2 628 517 A1**
(43) Veröffentlichungstag der Anmeldung: **21.08.2013**
(21) Anmeldenummer: 12155400.0
(22) Anmeldetag: 14.02.2012
(51) Int. Cl.: B01D 19/00, F01P 11/02, F16N 39/00

(54) **Vorrichtung zur Entgasung einer Dichtflüssigkeit**

(71) Anmelder: Siemens Aktiengesellschaft, 80333 München (DE)
(72) Erfinder: Bublitz, Axel, 13088 Berlin (DE); Hahn, Jürgen, 44797 Bochum (DE); Huemer, Jörg, 46537 Dinslaken (DE); Jüttner, Christoph, 44135 Dortmund (DE); Malangone, Barbara, 45891 Gelsenkirchen (DE); Winkelmann, Ulf Marvin, 44801 Bochum (DE)

(57) **Zusammenfassung**

Eine Vorrichtung (1) zur Entgasung einer Dichtflüssigkeit umfassend einen Entgasungsbehälter (16) mit einem Dichtflüssigkeitseinlass (14) und einen in einem oberen Bereich (20) des Entgasungsbehälters (16) angeordneten Gasauslass (28), wobei dem Gasauslass (28) eine Saugeinrichtung (30) nachgeschaltet ist, soll ohne Einbußen hinsichtlich der Entgasungswirkung technisch einfacher auszuführen sein. Dazu umfasst die Saugeinrichtung (30) eine Venturi-Düse (32).

## Beschreibung

Die Erfindung betrifft eine Vorrichtung zur Entgasung einer Dichtflüssigkeit umfassend einen Entgasungsbehälter mit einem Dichtflüssigkeitseinlass und einen in einem oberen Bereich des Entgasungsbehälters angeordneten Gasauslass, wobei dem Gasauslass eine Saugeinrichtung nachgeschaltet ist.

Insbesondere leistungsstarke Generatoren im Kraftwerksbereich benötigen zum effizienten und sicheren Betrieb eine Kühlvorrichtung zur Kühlung der Wicklung und anderer Bauteile. Eine Methode ist hierbei die Verwendung von den Generator durchströmendem Gas. Hier kann beispielsweise eine Luftkühlung vorgesehen sein.

Aufgrund der höheren Effizienz wird jedoch auch häufig eine Wasserstoffkühlung vorgesehen. Hierzu wird Wasserstoff durch den Generator geleitet. Da Wasserstoff jedoch leicht entzündlich und in einem weiten Konzentrationsbereich hochexplosiv ist, muss bei einer Wasserstoffkühlung gewährleistet sein, dass kein Wasserstoff aus dem Generator austreten kann. Insbesondere in den dynamischen Bereichen d. h. zwischen Welle und Gehäuse des Generators muss hier ein geeignetes Dichtsystem vorgesehen sein.

Die Abdichtung des Generators wird daher häufig durch ein spezielles Dichtölsystem gewährleistet. Dieses Dichtölsystem dichtet durch kontinuierlichen Ölvolumenstrom am Wellendurchgang den Generator nach außen hin ab.

Während des Flusses des Öls am Wellendurchgang werden sowohl Luft als auch Wasserstoff in das Öl eingetragen. Das Öl fließt dann von den Dichtungsbereichen in einen Sammelbehälter oder in den Dichtflüssigkeitseinlass eines Entgasungsbehälters. Hier muss das eingetragene Gas aus dem Öl entfernt werden, bevor es erneut zu den Dichtungen gepumpt werden kann.

Um das Entgasen zu beschleunigen, wird am Entgasungsbehälter häufig ein Unterdruck angelegt. Durch den im Behälter herrschenden Unterdruck wird das Lösungsvermögen des Öls herabgesetzt, das Entweichen des ins Öl eingebrachten Gases daher begünstigt und beschleunigt. Zur Erzeugung des Drucks wird einem Gasauslass im oberen Bereich des Entgasungsbehälters, d. h. im Leerraum daher eine Saugeinrichtung nachgeschaltet, die das aus dem Öl austretende Gas absaugt.

Die Saugeinrichtung ist üblicherweise als Drehschieberpumpe ausgelegt. Bedingt durch den Wasserstoffgehalt des Gases sind hierbei besondere Maßnahmen zu treffen, um der Explosionsgefahr zu begegnen. Saug- und Druckseite der Pumpe sind üblicherweise mit Feuerdurchschlagssicherungen ausgestattet, um im Falle eines Defektes an der Pumpe ein Durchschlagen in weitere Systemteile zu verhindern. Insgesamt sind hier vergleichsweise aufwändige Maßnahmen notwendig, um die Pumpe explosionsgeschützt auszuführen.

Es ist daher Aufgabe der Erfindung, eine Vorrichtung zur Entgasung einer Flüssigkeit anzugeben, die ohne Einbußen hinsichtlich der Entgasungswirkung technisch einfacher auszuführen ist.

Diese Aufgabe wird erfindungsgemäß gelöst, indem die Saugeinrichtung eine Venturi-Düse umfasst.

Die Erfindung geht dabei von der Überlegung aus, dass die technische Komplexität insbesondere der Saugeinrichtung reduziert werden könnte, wenn hier auf aufwändige Explosions- und Feuerdurchbruchssicherheitseinrichtungen verzichtet werden könnte. Dies wäre möglich, wenn die Saugeinrichtung weitgehend ohne elektrische und bewegliche Teile ausgestaltet wäre. Hier sollte daher eine Venturi-Düse bzw. ein Venturi-Rohr zur Anwendung kommen. Dieses ist sehr einfach aufgebaut und besteht im Wesentlichen aus einem glattwandigen, von einem fluiden Medium durchströmten Rohrstück mit einer Verengung des Querschnitts beispielsweise durch zwei gegeneinander gerichtete Konen, die an der Stelle ihres geringsten Durchmessers vereint sind. An dieser Stelle ist daneben ein Abnahmerohr platziert, das mit dem Entgasungsbehälter verbunden ist. Auf diese Weise ist die das Absaugen des Gases mit besonders einfachen Mitteln möglich.

Vorteilhafterweise ist die Dichtflüssigkeit ein Öl. Dieses bietet besonders gute Dichteigenschaften, insbesondere bei der Abdichtung eines Kühlsystems mit Wasserstoff.

In weiterer vorteilhafter Ausgestaltung ist der Dichtflüssigkeitseinlass einem Dichtflüssigkeitsauslass eines Generators nachgeschaltet. Gerade im Bereich großer Kraftwerksanlagen mit entsprechend groß ausgelegten Generatoren, die dann häufig mit Wasserstoff gekühlt werden, ist die Erfindung von besonderem Vorteil. Hier liegen auch häufig bereits Gase mit hohem Druck vor, die als Treibmedium in der Venturi-Düse verwendet werden können.

In vorteilhafter Ausgestaltung wird die Venturi-Düse mit Luft durchströmt. Da Luft weitgehend aus inertem Stickstoff besteht, wird dadurch insbesondere Wasserstoff als explosives Gas aus der Kühlung bei geeignet hohem Luftstrom durch die Venturi-Düse unter eine explosive Gaskonzentration verdünnt und kann in die Umgebung abgegeben werden.

Um hier einen geeigneten Stromfluss des Treibmediums einstellen zu können, umfasst die Venturi-Düse vorteilhafterweise ein Drosselventil. Über eine derartige einstellbare Zustromdrossel in der Zuführleitung der Venturi-Düse lässt sich auch der Unterdruck im Entgasungsbehälter einstellen: Eine stärker geschlossene Drossel bedeutet einen geringeren Massenstrom des Treibmediums und somit einen geringeren Unterdruck im Entgasungsbehälter. Eine weitere geöffnete Drossel bedeutet einen höheren Massenstrom und somit einen stärkeren Unterdruck im Entgasungsbehälter.

In weiterer vorteilhafter Ausgestaltung ist der Venturi-Düse ausgangsseitig eine Brennkammer einer Strömungsmaschine nachgeschaltet. Gerade bei Einsatz des Systems in einer Kraftwerksanlage kann dadurch bei der Verwendung von Luft als Treibmedium dessen Luftdruck zur Aufladung genutzt werden. Insbesondere bei der Verwendung von Wasserstoff als Kühlmittel im Generator kann dieser zusätzlich als Brennstoff in der Brennkammer genutzt werden und wird nicht ungenutzt an die Umgebung abgegeben.

In zusätzlicher oder alternativer Ausgestaltung ist der Venturi-Düse eingangsseitig ein Verdichter einer Strömungsmaschine nachgeschaltet. In einer Kraftwerksanlage liegt nämlich häufig ohnehin hochverdichtete Luft im Verdichter z. B. einer Gasturbine vor, so dass der für die Venturi-Düse benötigte Luftstrom technisch besonders einfach in Form von Zapfluft hier entnommen werden kann. In Kombination mit der Einleitung des Ausgangsstroms der Venturi-Düse in eine Brennkammer kann hier eine besonders effiziente Realisierung des beschriebenen Konzepts erfolgen, indem die Venturi-Düse in einer Bypassleitung einer Gasturbine zwischen Verdichter und Brennkammer angeordnet wird.

Vorteilhafterweise ist der Venturi-Düse weiterhin eine Gassammeleinrichtung nachgeschaltet. Falls keine direkte Weiterleitung in eine Brennkammer oder sonstige sofortige Verwendung des Luftstroms möglich ist, kann auf diese Weise eine Speicherung des Gases zur späteren Verwendung erreicht werden.

In weiterer vorteilhafter Ausgestaltung wird die Venturi-Düse mit Wasserdampf durchströmt. Dies kann insbesondere bei einer Anwendung in Dampfkraftwerken, aber auch bei kombinierten Gas- und Dampfkraftwerken von Vorteil sein, wo eine Vielzahl von Anzapfstellen, z. B. in der Dampfturbine oder dem Dampfkessel vorliegt, die Wasserdampf mit dem notwendigen Druck zur Verfügung stellen können.

In weiterer vorteilhafter Ausgestaltung wird die Venturi-Düse mit einem Brenngas durchströmt. Gerade bei hochleistungsfähigen Gasturbinen muss das Brenngas nämlich mit hohem Druck in die Brennkammer eingeführt werden, um den dort herrschenden, durch den Verdichter erzeugten Luftdruck zu überwinden. Daher liegt gerade in Gaskraftwerken häufig Brenngas mit dem für die Venturi-Düse benötigten Druck vor. Insbesondere bei der Verwendung von Wasserstoff als Kühlgas im Generator bietet dies den zusätzlichen Vorteil, dass das Brenngas, typischerweise Erdgas, mit brennbarem Wasserstoff angereichert wird.

Vorteilhafterweise umfasst eine Kraftwerksanlage eine Vorrichtung zur Entgasung einer Dichtflüssigkeit in der beschriebenen Art.

Die mit der Erfindung erzielten Vorteile bestehen insbesondere darin, dass durch die Verwendung einer Venturi-Düse zur Vakuumerzeugung und Entgasung von Dichtölsystemen auf aufwändige elektrische oder bewegliche Teile verzichtet werden kann und so eine technisch einfachere Konstruktion möglich ist. Gleichzeitig wird bei der Abdichtung gegen Wasserstoff als Kühlmittel der aus dem Entgasungsbehälter angesaugte Wasserstoff durch die strömende Druckluft sehr stark verdünnt, so dass kein explosionsfähiges Gemisch in der Abluftstrecke entstehen kann. Dadurch kann der beträchtliche Aufwand zum Explosionsschutz einer elektrisch angetriebenen Vakuumpumpe entfallen, wodurch sich die Kosten reduzieren lassen.

Die Erfindung wird anhand einer Zeichnung näher erläutert. Darin zeigt die FIG schematisch eine Vorrichtung zur Entgasung einer Dichtflüssigkeit für eine Kraftwerksanlage.

Die FIG zeigt ausschnittsweise einen Teil einer Kraftwerksanlage, nämlich einerseits eine Vorrichtung 1 zur Entgasung einer Dichtflüssigkeit, im Ausführungsbeispiel Dichtöl, sowie einen Generator 2. Der Generator ist im Wesentlichen in zwei Bereiche aufzuteilen, den festen Stator und den beweglichen Rotor. Der Rotor umfasst die Welle 4. Je nach Art der Kraftwerksanlage, die als Gas-, Dampf- oder kombinierte Gas- und Dampfturbinenanlage ausgestaltet sein kann, ist die Welle 4 mit einer oder mehreren Gas- und/oder Dampfturbinen verbunden. Gas- und Dampfturbinen sind dann mit der Welle 4 verbunden, wenn das Gas- und Dampfkraftwerk als Einwellenanlage ausgelegt ist.

Zur Stromerzeugung umfasst der Generator 2 Wicklungen 6 aus Draht, in denen das durch die Drehung der Welle 4 sich ändernde Magnetfeld im Generator 2 Strom induziert. Durch den nichtverschwindenden Widerstand der Wicklungen 6 entsteht dabei auch Wärme, die abgeführt werden muss. Dazu wird der Generator 2 von Wasserstoff durchströmt, der die Wärme aufnimmt und abtransportiert.

Da Wasserstoff in einem weiten Konzentrationsbereich explosiv ist, müssen umfangreiche Maßnahmen zur Abdichtung des Generators 2 unternommen werden. Der Generator 2 umfasst dazu ein nicht näher dargestelltes Dichtölsystem. Öl durchströmt dabei permanent abzudichtende Bereiche, insbesondere die Wellendichtbereiche als Grenzflächen zwischen Rotor und Stator. Dadurch wird der durchflossene Zwischenraum abgedichtet. Das Öl wird aus einer Dichtölzufuhrleitung 10 in den Generator 2 geführt.

Beim Durchfluss des Öls durch den Generator 2 nimmt dieses Wasserstoff in gelöster Form auf. Dieses muss vor der Wiedereinführung des Öls in den Generator 2 aus dem Öl entfernt werden. Dazu ist dem Dichtflüssigkeitsauslass 12 ein Dichtflüssigkeitseinlass 14 eines Entgasungsbehälters 16 nachgeschaltet. Da sich das Öl am Boden des Entgasungsbehälters 16 sammelt, ist dieser durch die Öloberfläche 18 in einen oberen Bereich 20 und einen unteren Bereich 22 geteilt, wobei der obere Bereich 20 einen lediglich mit Gasen gefüllten Leerraum bildet, in den der Wasserstoff aus dem Öl entweichen kann, während der untere Bereich 22 die derzeit im Entgasungsbehälter 16 enthaltene Menge Öl enthält.

Der Dichtflüssigkeitseinlass 14 ist im oberen Bereich 20 angeordnet. Im unteren Bereich ist eine Dichtölentnahmeöffnung 24 mit angeschlossener Leitung 26 angeordnet, die über eine nicht näher gezeigte Ölpumpe mit der Dichtölzufuhrleitung 10 verbunden ist, so dass hier ein Ölkreislauf gebildet wird. Im oberen Bereich 20 des Entgasungsbehälters 16 ist weiterhin ein Gasauslass 28 zum Auslass des aus dem Öl wieder austretenden Wasserstoffs angeordnet.

Um die Entgasung, d. h. das Entfernen des Wasserstoffs aus dem Öl zu beschleunigen, wird im Entgasungsbehälter 16, insbesondere im oberen Bereich 20 ein Unterdruck erzeugt. Dies geschieht über eine Saugeinrichtung 30, die an den Gasauslass 28 angeschlossen ist. Die Saugeinrichtung 30 soll technisch besonders einfach ausgestaltet sein und keiner besonderen Explosionsschutzmaßnahmen bedürfen.

Dazu umfasst die Saugeinrichtung 30 eine als Gasstrahlrohr ausgebildete Venturi-Düse 32. Die Venturi-Düse 32 besteht aus einem glattwandigen Rohrstück mit einer Verengung 34 des Querschnitts durch zwei gegeneinander gerichtete Konen 36, die an der Stelle ihres geringsten Durchmessers vereint sind. An dieser Verengung 34 ist ein Abnahmerohr 38 platziert, das mit dem Gasauslass 28 des Entgasungsbehälters 16 verbunden ist.

Die Venturi-Düse 32 umfasst einen Eintritt 40 und einen Austritt 42. Dem Eintritt 42 ist ein Drosselventil 44 vorgeschaltet, über das die Durchflussmenge durch die Venturi-Düse 32 geregelt wird.

Fließt durch die Venturi-Düse 32 ein gasförmiges oder flüssiges Medium, so ist an der Verengung 34 des Rohres der dynamische Druck (Staudruck) maximal und der statische Druck minimal. Die Geschwindigkeit des fließenden Gases (bzw. der Flüssigkeit) steigt im Verhältnis der Querschnitte beim Durchströmen des eingeschnürten Teils an, weil überall dieselbe Menge durchfließt. Gleichzeitig sinkt der Druck im Abnahmerohr 38, das genau in der Verengung 34 sitzt. Damit entsteht ein Unterdruck, der sich auf den Entgasungsbehälter 16 überträgt.

Verschiedene Ausführungsformen auf Basis der in FIG gezeigten Vorrichtung 1 möglich, die sich insbesondere in ihrer Integration in eine Kraftwerksanlage unterscheiden. Diese werden im Folgenden beschrieben.

In einer ersten Ausführungsform ist die Venturi-Düse 32 mit Zapfluft aus dem Verdichter einer Gasturbine gespeist. Der Austritt 42 führt in einen Kamin der Kraftwerksanlage. In einer alternativen zweiten Ausführungsform ist der Austritt 42 mit einer Gassammeleinrichtung verbunden.

In einer dritten Ausführungsform ist dem Austritt 42 die Brennkammer der Gasturbine nachgeschaltet. Die Venturi-Düse 32 ist also in einen Bypass der Gasturbine geschaltet. In einer vierten Ausführungsform wird die Venturi-Düse 32 von Erdgas für die Versorgung der Gasturbine durchströmt und führt austrittsseitig in die Brennkammer der Gasturbine.

In einer fünften Ausführungsform wird die Venturi-Düse 32 mit Anzapfdampf aus einer Dampfkraftanlage gespeist. Der Anzapfdampf kann hier an der Dampfturbine selbst oder aber in einem Bereich des Dampfkessels entnommen werden.

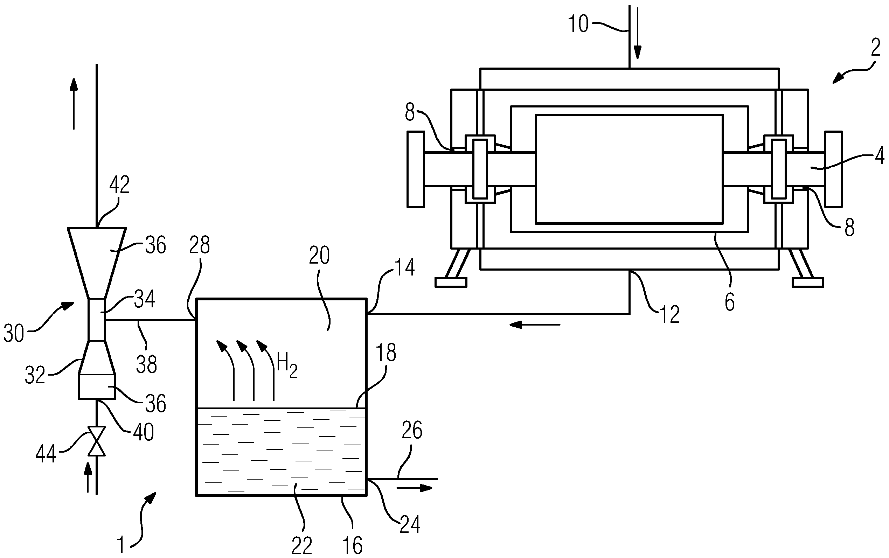

## Patentansprüche

1. Vorrichtung (1) zur Entgasung einer Dichtflüssigkeit umfassend einen Entgasungsbehälter (16) mit einem Dichtflüssigkeitseinlass (14) und einen in einem oberen Bereich (20) des Entgasungsbehälters (16) angeordneten Gasauslass (28), wobei dem Gasauslass (28) eine Saugeinrichtung (30) nachgeschaltet ist, wobei die Saugeinrichtung (30) eine Venturi-Düse (32) umfasst.

2. Vorrichtung (1) nach Anspruch 1,
bei der die Dichtflüssigkeit ein Öl ist.

3. Vorrichtung nach Anspruch 1 oder 2,
bei dem der Dichtflüssigkeitseinlass (14) einem Dichtflüssigkeitsauslass (12) eines Generators (2) nachgeschaltet ist.

4. Vorrichtung (1) nach einem der vorhergehenden Ansprüche,
bei der die Venturi-Düse (32) mit Luft durchströmt wird.

5. Vorrichtung (1) nach einem der vorhergehenden Ansprüche,
bei der die Venturi-Düse (32) ein Drosselventil (44) umfasst.

6. Vorrichtung (1) nach einem der vorhergehenden Ansprüche,
bei der der Venturi-Düse (32) ausgangsseitig eine Brennkammer einer Strömungsmaschine nachgeschaltet ist.

7. Vorrichtung (1) nach einem der vorhergehenden Ansprüche,
bei der der Venturi-Düse (32) eingangsseitig ein Verdichter einer Strömungsmaschine nachgeschaltet ist.

8. Vorrichtung (1) nach einem der vorhergehenden Ansprüche,
bei der der Venturi-Düse (32) eine Gassammeleinrichtung nachgeschaltet ist.

9. Vorrichtung (1) nach einem der vorhergehenden Ansprüche,
bei der die Venturi-Düse (32) mit Wasserdampf durchströmt wird.

10. Vorrichtung (1) nach einem der vorhergehenden Ansprüche,
bei der die Venturi-Düse (32) mit einem Brenngas durchströmt wird.

11. Kraftwerksanlage mit einer Vorrichtung (1) nach einem der vorhergehenden Ansprüche.
